# FASCICULE DE BREVET EUROPEEN

(11) **EP 1 014 607 B1**
(45) Date de publication et mention de la délivrance du brevet: **13.07.2005**
(21) Numéro de dépôt: 99403120.1
(22) Date de dépôt: 13.12.1999
(51) Int. Cl.: H04B 10/18, H04J 14/02

(54) **Procédé de réduction des distorsions d'intensité induités par la modulation de phase croisée dans un systeme de transmission à fibre optique à multiplexage de longueur d'onde**
Verfahren zum Reduzieren von Kreuzphasenmodulation-induzierter Intensitätsverzerrung in einem optischen WDM Übertragungssystem
Method for reducing intensity distortions caused by cross-phase modulation in an optical WDM transmission system

(30) Priorité: 21.12.1998 FR 9816109
(43) Date de publication de la demande: 28.06.2000
(73) Titulaire: ALCATEL, 75008 Paris (FR)
(72) Inventeur: Bigo, Sébastien, 91120 Palaiseau (FR); Bellotti, Giovanni, 43100 Parma (IT)
(74) Mandataire: Sciaux, Edmond

(56) Documents cités:
- EP-A- 0 657 754
- GB-A- 2 161 612
- INOUE K: "SUPPRESSION TECHNIQUE FOR FIBER FOUR-WAVE MIXING USING OPTICAL MULTI-/DEMULTIPLEXERS AND A DELAY LINE" JOURNAL OF LIGHTWAVE TECHNOLOGY, vol. 11, no. 3, 1 mars 1993 (1993-03-01), pages 455-461, XP000577337 ISSN: 0733-8724

## Description

La présente invention concerne un procédé de réduction de la distorsion d'intensité induite par la modulation de phase croisée dans un système de transmission par fibre optique à multiplexage en longueur d'onde.

La maîtrise de la technologie de la transmission par fibre optique à multiplexage de longueurs d'onde optique (WDM pour "wavelength divison multiplexing " en anglais) est un facteur important pour répondre aux besoins croissants de débits dans la transmission d'informations.

Le multiplexage en longueur d'onde, appelé WDM par la suite, consiste à combiner sur une même fibre plusieurs canaux modulés ayant chacun une longueur d'onde porteuse différente. Ainsi, le débit global d'une ligne de transmission est égal à la somme des débits des différents canaux.

Toutefois, le WDM est soumis à des limitations de la propagation. Ces limitations sont dues à des effets linéaires, comme la dispersion de vitesse de groupe (GVD pour " group velocity dispersion " en anglais), et à des effets non linéaires, comme l'automodulation de phase ou la modulation de phase croisée.

Les documents de brevet GB-A-2 161 612 et EP-A-0 657 754 décrivent des systèmes de transmission à fibre optique avec compensation de la dispersion chromatique où l'on introduit des décalages temporels entre les différents composants en longueur d'onde du signal optique.

Le document "Suppression Technique for Fiber Four-Wave Mixing Using Optical Multi-/Demultiplexers and a Delay Line", Inoue K., Journal of Lightwave Technology, vol. 11, no.3, mars 1993, pages 455-461, décrit un procédé de réduction d'intensité par effet de mélange à quatre ondes (FWM) dans un système de transmission à fibre optique à multiplexage en longueur d'onde, ledit procédé comportant - au niveau des répéteurs reliant des tronçons de fibre consécutifs - l'introduction d'un certain décalage temporel entre les canaux du signal multiplex.

La présente invention a plus particulièrement trait à la réduction de l'effet de la modulation de phase croisée (XPM pour " cross phase modulation " en anglais) dans des systèmes de transmission par fibre optique à multiplexage en longueur d'onde.

La XPM est un effet multicanal dans lequel la modulation de phase d'un canal est induite par l'intensité du signal du ou des canaux voisins. Ce phénomène conduit donc à des distorsions de l'intensité du signal à transmettre au travers de la GVD et limite ainsi la puissance maximale qui peut être introduite dans une fibre optique de transmission.

Or, plus la puissance introduite dans une fibre optique de transmission peut être élevée, plus la distance entre répéteurs d'une ligne peut être élevée et plus la distance totale de transmission peut être élevée.

Pour réduire la XPM, on connaît de l'article de R.A. Saunders et al. intitulé "Compensation of cross phase modulation in 10 Gbit/s WDM systems by interfering channel prechirp ", OFC'98, paper FC3, San Diego, CA, Février 1998, un procédé selon lequel la XPM est compensée en modulant le signal optique à transmettre au niveau de l'émetteur avec une phase opposée à celle induite par la XPM.

Cependant, cette solution n'est adaptée qu'à des fibres optiques présentant une dispersion très faible. De plus, ce procédé ne prend pas en compte l'interaction entre la dispersion chromatique et l'effet Kerr.

En outre, ce procédé est difficile à mettre en oeuvre, car il nécessite une parfaite connaissance de tous les canaux en ce qui concerne par exemple leurs puissances et formats de modulation.

La présente invention vise à pallier ces divers inconvénients en proposant un procédé qui permette de réduire de manière efficace et simple la distorsion d'intensité induite par la modulation de phase croisée dans un système de transmission par fibre optique à multiplexage en longueur d'onde.

A cet effet, l'invention a pour objet un procédé de réduction de la distorsion d'intensité induite par la modulation de phase croisée dans un système de transmission à fibre optique à multiplexage en longueur d'onde comprenant une ligne de transmission formée de plusieurs tronçons de fibre optique avec un répéteur interposé entre deux tronçons de fibre optique, le système de transmission disposant de N canaux de longueurs d'onde différentes, N étant un nombre entier supérieur à l'unité, caractérisé en ce qu'au niveau de chaque répéteur reliant un premier et un second tronçons consécutifs de fibre, on introduit un décalage temporel entre les canaux de telle sorte que par rapport à l'entrée du premier tronçon de fibre optique, le (n+1)-ième et le n-ième canal sont décalés de τₙ à l'entrée du second tronçon de fibre, n étant un nombre entier inférieur à N, où τₙ est choisi supérieur à zéro et inférieur à une valeur supprimant la corrélation des contributions de distorsion d'intensité de chaque tronçon de fibre.

Le procédé selon l'invention prévoit en outre que pour tous les canaux τₙ=τ, ledit décalage temporel τ étant inférieur à environ 600 ps.

Le procédé selon l'invention peut comporter en outre une ou plusieurs des caractéristiques suivantes :
- le décalage temporel τ est choisi de manière à obtenir une interférence destructive entre les différentes contributions de distorsion des tronçons individuels (TF) de fibre optique,
- le décalage temporel τ est approximativement compris entre T/10 et 1,5*T, où T est la durée d'un bit,
- le décalage temporel τ est approximativement compris entre 5 et 200ps,
- il comprend en outre une étape de démultiplexage préalable à l'introduction des décalages temporels entre canaux et une étape de multiplexage réalisée après l'introduction des décalages temporels entre canaux.

L'invention a en outre pour objet une unité pour la mise en oeuvre du procédé défini ci-dessus, caractérisée en ce qu'elle comprend
un guide d'ondes optiques d'entrée pour des signaux optiques multiplexés en longueurs d'onde,
un guide d'ondes optiques de sortie pour des signaux optiques multiplexés en longueurs d'onde,
un circulateur optique comprenant un premier, un deuxième et un troisième ports dont le premier et le troisième ports sont respectivement reliés audit guide d'ondes optiques d'entrée et audit guide d'ondes optiques de sortie, et un troisième guide d'ondes optiques relié au second port et comprenant une fibre présentant pour chacun des N canaux un réseau de Bragg associé pour renvoyer par réflexion les signaux optiques du canal associé vers le second port, la distance Iₙ entre le n-ième et le n+1-ième réseaux de Bragg étant choisie de manière à introduire un délai total τₙ" entre le (n+1)-ième et le n-ième canal pour obtenir entre le (n+1)-ième et le n-ième canal un décalage temporel de τₙ à l'entrée du tronçon de fibre suivant ladite unité par rapport à l'entrée du tronçon de fibre optique précédent ladite unité, où τₙ est choisi supérieur à zéro et inférieur à environ 600 ps, avec pour tous les canaux τₙ=τ.

L'invention a en outre pour objet une unité pour la mise en oeuvre du procédé défini ci-dessus, caractérisée en ce qu'elle comprend
un guide d'ondes optiques d'entrée pour des signaux optiques multiplexés en longueurs d'onde,
un démultiplexeur des signaux optiques multiplexés en longueurs d'onde en sortie dudit guide d'ondes optiques d'entrée en N canaux individuels,
un multiplexeur des signaux optiques en sortie des N canaux individuels, la sortie du multiplexeur étant reliée à un guide d'ondes optiques de sortie, et en ce que
une ligne de retard est disposée dans chaque canal individuel associé, dont la longueur de chacune est choisie de manière à introduire un délai total τₙ" entre le (n+1)-ième et le n-ième canal pour obtenir entre le (n+1)-ième et le n-ième canal un décalage temporel de τₙ à l'entrée du tronçon de fibre suivant ladite unité par rapport à l'entrée du tronçon de fibre optique précédent ladite unité, où τₙ est choisi supérieur à zéro et inférieur à environ 600 ps, avec pour tous les canaux τₙ=τ.

D'autres caractéristiques et avantages de l'invention ressortiront de la description suivante, donnée à titre d'exemple, sans caractère limitatif, en regard des dessins annexés sur lesquels :
- La figure 1 montre un schéma synoptique d'un système de transmission de données mettant en oeuvre le procédé selon l'invention
- La figure 2 est un schéma synoptique d'une partie du module de répéteur de la figure 1,
- Les figures 3A, 3B, 3C et 3D représentent une suite de quatre schémas montrant le décalage temporel entre deux canaux n et n+1 à des emplacements différents du système de transmission pour illustrer le procédé selon l'invention,
- La figure 4 est un graphique montant le résultat d'une simulation numérique d'un équipement mettant en oeuvre le procédé selon l'invention avec dix tronçons de fibre SMF de 100km de longueur chacun,
- La figure 5 est un graphique montrant des résultats expérimentaux obtenus avec un montage expérimental mettant en oeuvre le procédé selon l'invention,
- Les figures 6A et 6B montrent des graphiques présentant respectivement une séquence de bits et un diagramme de l'oeil lorsque le décalage temporel entre les deux canaux est 0ps,
- Les figures 7A et 7B montrent des graphiques présentant respectivement une séquence de bits et un diagramme de l'oeil lorsque le décalage temporel entre les deux canaux est de 100ps, et
- La figure 8 est une vue identique à celle de la figure 2 d'une variante d'un module de répéteur.

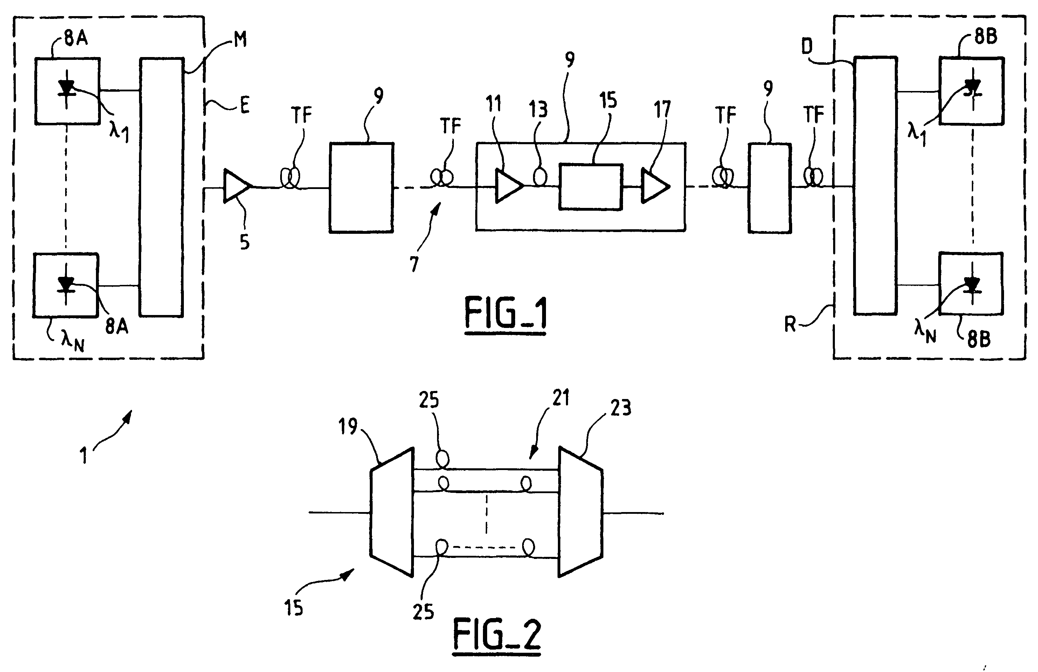

La figure 1 est un schéma synoptique d'un système 1 de transmission de données à fibre optique à multiplexage en longueur d'onde.

Ce système 1 comprend, disposés en ligne, un émetteur optique E de signaux optiques multiplexés en longueur d'onde, un premier amplificateur optique d'attaque 5, une ligne 7 de transmission à fibre optique des signaux optiques multiplexés et un récepteur optique R.

L'émetteur E comprend une pluralité de sources optiques 8A aptes à émettre des signaux optiques ayant des longueurs d'onde respectives λ₁, λ₂, ...λₙ...λ_{N} (n étant un nombre entier compris entre 1 et N ; N étant un nombre naturel quelconque) définissant ainsi chacun un canal de transmission avec une porteuse de longueur d'onde associée, et un multiplexeur M pour introduire les signaux optiques dans la ligne 7 de transmission.

De manière symétrique, le récepteur optique R comprend un démultiplexeur D et une pluralité de détecteurs 8B aptes à recevoir les signaux optiques de longueurs d'onde respectives λ₁, λ₂, ....λ_{N}.

La ligne 7 de transmission comprend K tronçons TF d'une fibre optique de transmission (K étant un nombre naturel). Chaque tronçon TF est par exemple formé par une fibre standard SMF (pour « standard single mode fiber » en anglais) ayant une dispersion typique de 17ps/nm.km, et possède par exemple une longueur de 100km environ.

Entre chaque tronçon TF est disposé un module 9 de répéteur comprenant en ligne un premier amplificateur optique 11 par exemple du type à fibre dopée Erbium EDFA (pour « Erbium Doped Fiber Amplifier en anglais), une portion de fibre compensatrice de dispersion DCF 13 (pour « dispersion compensated fiber » en anglais) afin de réduire la GVD, une unité 15 de réduction de la modulation de phase croisée XPM et un second amplificateur optique 17 qui peut également être du type à fibre dopée Erbium EDFA.

On se réfère maintenant à la figure 2 qui présente un schéma synoptique plus détaillé d'un premier mode de réalisation de l'unité 15.

Ainsi que l'on peut le voir sur cette figure 2, l'unité 15 comprend un démultiplexeur 19 à une entrée et N sorties, un ensemble de N lignes de fibre optique 21 en parallèle correspondant aux N canaux de transmission, et un multiplexeur 23 à N entrées et une sortie.

Chacune des lignes de fibre optique comporte une ligne 25 à retard optique introduisant entre les canaux un retard de telle sorte que le (n+1)-ième et le n-ième canal sont décalés de τₙ à l'entrée du tronçon TF de la fibre optique suivant l'unité 15 par rapport au tronçon TF de fibre précédent l'unité 15.

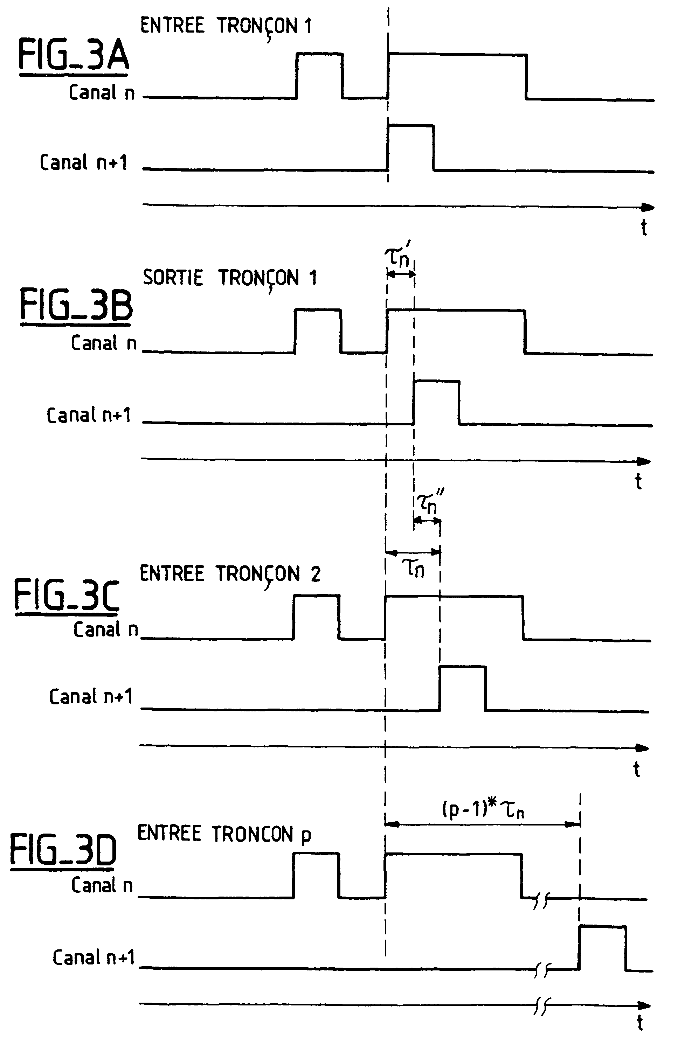

A titre d'exemple, on a représenté sur les figures 3A, 3B, 3C et 3D le décalage temporel de deux séquences de bits transmises respectivement sur le canal n et sur le canal n+1 à des emplacements différents du système 1 de transmission.

Ainsi que l'on voit sur la figure 3A, la séquence de bits sur le canal n est : 10111, et celle sur le canal n+1 : 00100. Pour mieux illustrer le principe de l'invention, les séquences de bits sont synchronisées à l'entrée du premier tronçon TF de fibre.

En sortie du premier tronçon TF de fibre, les deux séquences sont décalées temporellement du fait de la dispersion chromatique dans le tronçon de fibre. (voir figure 3B). Puis, dans le module répéteur 9, la portion de fibre DCF 13 réduit la dispersion entre les deux canaux n et n+1 à une valeur τₙ'.

Ensuite, en prenant en compte le décalage temporel des deux séquences à son entrée, l'unité 15 de réduction de la modulation de phase croisée XPM introduit un décalage supplémentaire τₙ" entre les séquences, de sorte que par rapport à l'entrée du premier tronçon TF de fibre, les séquences des canaux n et n+1 sont décalées τₙ à l'entrée du second tronçon TF de fibre optique, comme cela est montré sur la figure 3C.

Ainsi, chaque unité 15 disposée dans la ligne de transmission 7 introduit un décalage de sorte qu'à l'entrée du tronçon p, les deux séquences sont décalées de (p-1)* τₙ par rapport à l'entrée du premier tronçon TF de fibre optique du système 1 de transmission. De cette manière, on prend en compte les contributions à la XPM de tous les tronçons TF de fibre.

Selon le procédé de l'invention, τₙ est choisi supérieur à zéro et inférieur à environ 600 ps, avec pour tous les canaux τₙ=τ.

La XPM peut être réduite davantage si on choisit le décalage temporel τ de manière à obtenir une interférence destructive entre les différentes contributions de distorsion des tronçons TF de fibre optique. Dans ce cas, la XPM peut être réduite d'un facteur K² environ.

A cet effet, on fixe le décalage temporel τ de façon à ce qu'il soit approximativement compris entre T/10 et 1,5*T, où T est la durée d'un bit.

Typiquement, on choisira le décalage temporel τ entre 5 et 200ps.

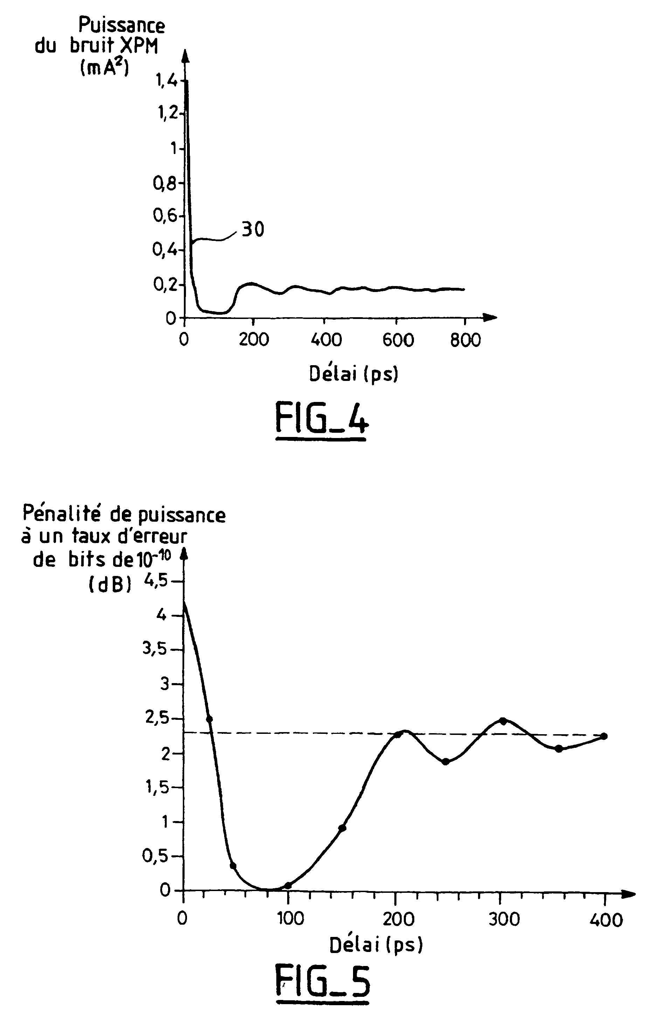

La figure 4 présente un graphique montant le résultat d'une simulation numérique d'un système de transmission tel que décrit en référence aux figures 1 et 2 avec dix tronçons de fibre SMF de 100km de longueur chacun. On y a représenté en abscisses le décalage temporel ou délai τ en ps entre deux canaux voisins et en ordonnées la puissance du bruit XPM en mA².

La courbe 30 de cette figure 4 montre clairement que le bruit XPM peut être efficacement réduit pour un τ inférieur à 600ps, c'est-à-dire lorsqu'on maintient la corrélation entre les contributions des distorsions des tronçons TF individuels, et atteint un minimum s'il est compris entre 5 et 200ps.

L'efficacité de l'unité 15 de réduction de la modulation de phase croisée XPM est d'autant plus grande que l'effet de XPM sera important. Ceci est par exemple le cas dans les fibres du type NZDSF (pour "non zéro dispersion shifted fiber" en anglais) présentant une dispersion de 2 à 3ps /nm.km, quel que soit le signe.

Le système de transmission 1 décrit en référence aux figures 1 et 2, a en outre été testé expérimentalement avec deux canaux de transmission de longueurs d'onde différentes. Dans la configuration expérimentale, afin de maximiser la XPM, d'une part, on a utilisé à la place de la fibre SMF, trois tronçons TF de fibre du type NZDSF de faible dispersion de 100km de longueur chacun, et d'autre part, on a ajouté un dispositif de contrôle de la polarisation dans un des deux canaux dans l'unité 15. La puissance d'entrée du canal détecté est de 2dBm et celle de l'autre canal de 8dBm.

De plus, les sources optiques 8A comprises dans l'émetteur E disposaient de générateurs de mots ayant respectivement leur propre horloge et des modulateurs indépendants.

Lors des expériences, on a déterminé la puissance du signal, en dBm, pour laquelle le taux d'erreur de bits devient supérieur à 10⁻¹⁰.

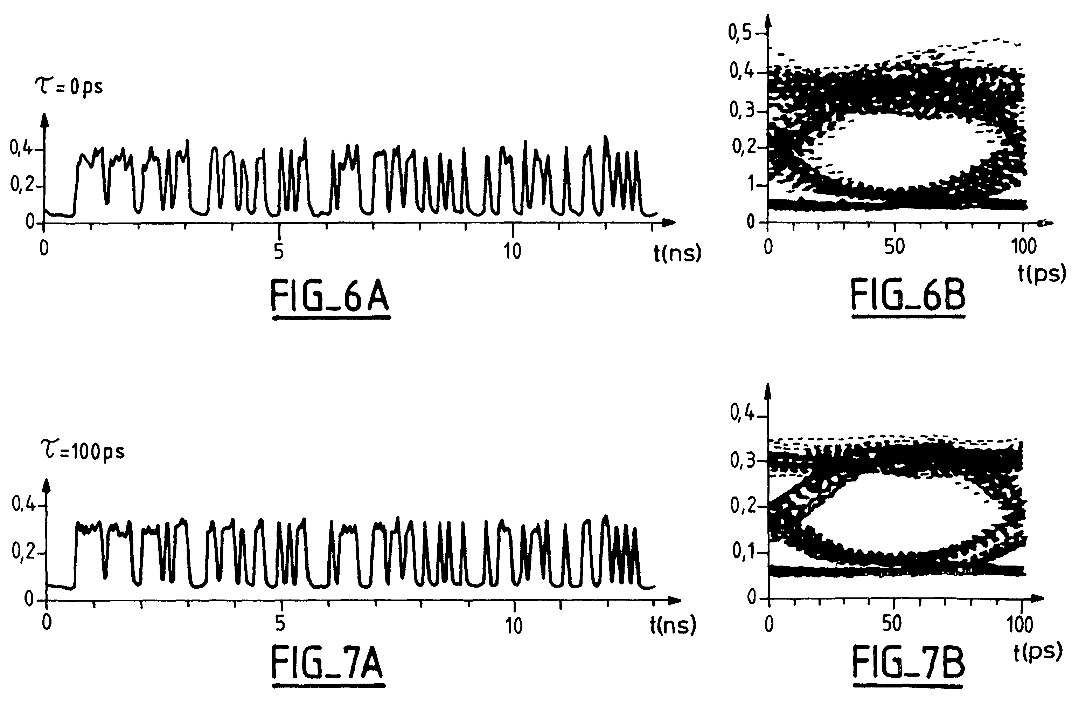

Le résultat des expériences est présenté sur un graphique à la figure 5 montrant en abscisses le décalage temporel ou délai τ en ps entre les deux canaux et en ordonnées la pénalité de puissance en dB due à la XPM.

Comme on peut le constater sur la figure 5, le résultat expérimental confirme les résultats des simulations numériques. On y voit aussi clairement que la XPM peut efficacement être réduite en choisissant τ de préférence compris entre 5 et 200ps pour obtenir une interférence destructive entre les contributions à la XPM des différents tronçons TF de fibre. De plus, on voit que pour τ égal à environ 75ps, la puissance de bruit présente un minimum atteignant pratiquement la valeur de zéro dB. Cela signifie qu'en choisissant τ égal à une valeur correspondant à un maximum d'interférence destructive, le procédé selon l'invention permet d'éliminer pratiquement entièrement les distorsions dues à la XPM dans un système de transmission de données équipé d'unités 15 selon l'invention.

Les figures 6A, 6B ainsi que 7A et 7B montrent des résultats expérimentaux permettant une comparaison entre une configuration non corrigée pour la XPM dans laquelle τ est égale à zéro (figures 6A et 6B) et une configuration mettant en oeuvre le procédé selon l'invention dans laquelle τ est égal à 100ps. Pour ces deux configurations, les séquences de bits pour les deux canaux ont été générées par la même horloge.

Les figures 6A et 7A montrent des graphiques présentant une séquence de bits enregistrée pendant une dizaine de ns avec respectivement τ = 0ps et τ = 100ps.

En comparant ces deux figures 6A et 7A, on voit clairement que la séquence de bits de la figure 7A obtenu par le procédé selon l'invention est beaucoup moins affectée par des distorsions que celle de la figure 6A.

Les diagrammes de l'oeil 6B et 7B correspondant respectivement aux configurations expérimentales des figures 6A et 7A confirment l'analyse des ces dernières.

En effet, le diagramme de l'oeil correspondant à τ = 100ps (figure 7B) est bien plus net et ouvert que celui correspondant à τ = 0ps.

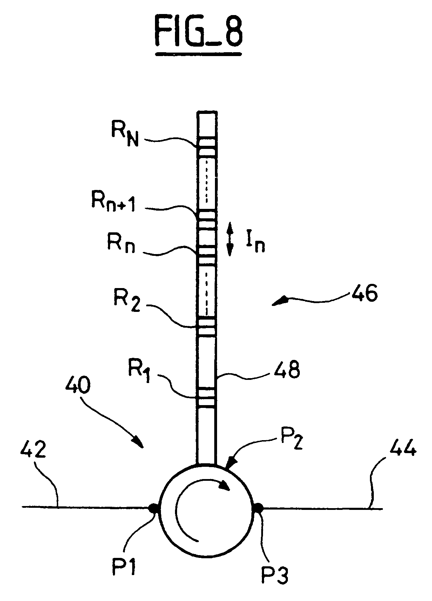

Sur la figure 8 est représenté un schéma synoptique d'une variante de l'unité 15 de réduction de la modulation de phase croisée XPM de la figure 2.

Cette unité 15 comprend un circulateur optique 40 à trois ports portant respectivement les références P1, P2 et P3. Le circulateur optique 40 est conçu pour transmettre un signal optique reçu sur son port P1 vers son port P2, et un signal reçu de son port P2 vers son port P3.

Les circulateurs optiques sont connus en soi dans la technique, et leur utilisation avec des fibres optiques est par exemple décrite dans l'article de Y. FUJI : « High isolation polarization-independant optical circulator coupled with single mode fibers », publié dans la revue américaine I.E.E.E. : « Journal of Lightwave Technology », vol. 9, 1991, p.456 à 460, ainsi que dans la publication « Proceedings of the 16^{th} European Conference on Optical Communication », September 16-20, 1990, Amsterdam, p. 99 à 102, article de S. NISHI et K. NAKAGAWA « Highly efficient configuration of erbium doped fiber amplifier ».

Les ports P1 et P3 du circulateur 40 sont respectivement reliés à un premier et un second guides d'ondes optiques, à savoir une fibre optique d'entrée 42 et une fibre optique de sortie 44 de l'unité 15.

Un troisième guide d'onde optique 46 est relié au second port P2 du circulateur 40. Ce troisième guide d'onde 46 comprend une fibre 48 présentant pour chacun des N canaux un réseau Rₙ de Bragg associé. Ces réseaux de Bragg sont avantageusement directement photoinscrits sur la fibre 48.

On comprend donc que le signal optique émis dans le canal n de longueur d'onde λₙ arrive sur le port P1, est transmis vers le port P2, parcourt la fibre 48 jusqu'au réseau Rₙ, où il est réfléchi vers le circulateur 40, et est finalement transmis depuis le port P2 vers le port P3.

La distance Iₙ entre le n-ième Rₙ et le n+1-ième Rₙ₊₁ réseaux de Bragg sur la fibre 48 est choisie de manière à introduire un délai total τₙ" entre le (n+1)-ième et le n-ième canal pour obtenir un décalage ou retard de τₙ entre le (n+1)-ième et le n-ième canal à l'entrée du tronçon de fibre suivant l'unité 15 par rapport à l'entrée du tronçon de fibre précédent l'unité 15, où τₙ est choisi comme cela a été décrit en référence aux figures 2 et 3.

Selon une variante avantageuse non représentée, le module 9 est exempt de fibre compensatrice de dispersion DCF et c'est l'unité 15 qui assure à la fois la compensation de la dispersion et la réduction de la XPM.

Par ailleurs, on note que le procédé selon l'invention et l'unité pour la mise en oeuvre de celui-ci permettent en outre de réduire considérablement les interactions entre canaux dues à la diffusion Raman stimulée ou au mélange à quatre ondes FWM (pour « Four-Wave-Mixing » en anglais).

## Revendications

1. Procédé de réduction de la distorsion d'intensité induite par la modulation de phase croisée dans un système (1) de transmission à fibre optique à multiplexage en longueur d'onde comprenant une ligne (7) de transmission formée de plusieurs tronçons (TF) de fibre optique avec un répéteur (9) interposé entre deux tronçons (TF) de fibre optique, le système de transmission (1) disposant de N canaux de longueurs d'onde différentes, N étant un nombre entier supérieur à l'unité, ce procédé prévoyant qu'au niveau de chaque répéteur (9) reliant un premier et un second tronçons de fibres consécutifs (TF), on introduit un décalage temporel entre les canaux de telle sorte que par rapport à l'entrée du premier tronçon de fibre optique, le (n+1)-ième et le n-ième canal sont décalés de τₙ à l'entrée du second tronçon (TF) de fibre, n étant un nombre entier inférieur à N, où τₙ est choisi supérieur à zéro et inférieur à environ 600 ps, avec pour tous les canaux τₙ=τ.

2. Procédé selon la revendication 1, **caractérisé en ce que** le décalage temporel τ est approximativement compris entre T/10 et 1,5*T, où T est la durée d'un bit.

3. Procédé selon la revendication 1 ou 2, **caractérisé en ce que** le décalage temporel τ est approximativement compris entre 5 et 200ps.

4. Procédé selon l'une quelconque des revendications 1 à 3, **caractérisé en ce que** qu'il comprend en outre une étape de démultiplexage préalable à l'introduction des décalages temporels entre canaux et une étape de multiplexage réalisée après l'introduction des décalages temporels entre canaux.

5. Unité pour la mise en oeuvre du procédé selon la revendication 1, ladite unité comprenant
- un guide d'ondes optiques d'entrée (42) pour des signaux optiques multiplexés en longueurs d'onde,
- un guide d'ondes optiques de sortie (44) pour des signaux optiques multiplexés en longueurs d'onde,
- un circulateur optique (40) comprenant un premier (P1), un deuxième (P2) et un troisième (P3) ports dont le premier et le troisième ports (P1, P3) sont respectivement reliés audit guide d'ondes optiques d'entrée (42) et audit guide d'ondes optiques de sortie (44), et un troisième guide d'ondes optiques (46) relié au second port (P2) et comprenant une fibre (48) présentant pour chacun des N canaux un réseau de Bragg associé (Rₙ) pour renvoyer par réflexion les signaux optiques du canal associé vers le second port (P2), la distance Iₙ entre le n-ième et le n+1-ième réseaux de Bragg (Rₙ, Rₙ₊₁) étant choisie de manière à introduire un délai total τₙ" entre le (n+1)-ième et le n-ième canal pour obtenir entre le (n+ 1)-ième et le n-ième canal un décalage temporel de τₙ à l'entrée du tronçon de fibre suivant ladite unité (15) par rapport à l'entrée du tronçon (TF) de fibre optique précédent ladite unité (15), où τₙ est choisi supérieur à zéro et inférieur à environ 600 ps, avec pour tous les canaux τₙ=τ.

6. Unité pour la mise en oeuvre du procédé selon la revendication 1, ladite unité comprenant
- un guide d'ondes optiques d'entrée pour des signaux optiques multiplexés en longueurs d'onde,
- un démultiplexeur (19) des signaux optiques multiplexés en longueurs d'onde en sortie dudit guide d'ondes optiques d'entrée en N canaux individuels (21),
- un multiplexeur (23) des signaux optiques en sortie des N canaux individuels, la sortie du multiplexeur étant reliée à un guide d'ondes optiques de sortie, et
- une ligne de retard (25) est disposée dans chaque canal individuel associé, dont la longueur de chacune est choisie de manière à introduire un délai total τₙ" entre le (n+1)-ième et le n-ième canal pour obtenir entre le (n+1)-ième et le n-ième canal un décalage temporel de τₙ à l'entrée du tronçon de fibre suivant ladite unité (15) par rapport à l'entrée du tronçon (TF) de fibre optique précédent ladite unité (15), où τₙ est choisi supérieur à zéro et inférieur à environ 600 ps, avec pour tous les canaux τₙ=τ.

## Patentansprüche

1. Verfahren zum Reduzieren der Kreuzphasenmodulation-induzierten Intensitätsverzerrung in einem optischen WDM-Übertragungssystem (1), aufweisend welches eine Übertragungsleitung (7), die von mehreren Lichtleitfaserabschnitten (TF) gebildet wird, mit jeweils einem zwischen zwei Lichtleitfaserabschnitten (TF) angeordneten Verstärker (9), wobei das Übertragungssystem (1) über N Kanäle mit unterschiedlichen Wellenlängen verfügt, wobei N eine ganze Zahl größer eins ist, wobei dieses Verfahren vorsieht, dass an jedem Verstärker (9), der einen ersten und einen zweiten aufeinander folgenden Faserabschnitt (TF) verbindet, eine Zeitverschiebung zwischen den Kanälen in der Weise eingeführt wird, dass gegenüber dem Eingang des ersten Lichtleitfaserabschnitts der (n+1)-te und der n-te Kanal am Eingang des zweiten Faserabschnitts (TF) um τₙ verschoben sind, wobei n eine ganze Zahl kleiner N ist, wobei τₙ größer als null und kleiner als ungefähr 600 ps gewählt wird, und wobei für alle Kanale τₙ = τ gilt.

2. Verfahren nach Anspruch 1, **dadurch gekennzeichnet, dass** die Zeitverschiebung τ ungefähr zwischen T/10 und 1,5*T liegt, wobei T gleich der Dauer eines Bit ist.

3. Verfahren nach Anspruch 1 oder 2, **dadurch gekennzeichnet, dass** die Zeitverschiebung τ ungefähr zwischen 5 und 200 ps liegt.

4. Verfahren nach einem der Ansprüche 1 bis 3, **dadurch gekennzeichnet, dass** es außerdem einen Demultiplex-Schritt vor der Einführung der Zeitverschiebungen zwischen Kanälen aufweist sowie einen Multiplex-Schritt, der nach der Einführung der Zeitverschiebungen zwischen Kanälen ausgeführt wird.

5. Einrichtung zur Anwendung des Verfahrens nach Anspruch 1, wobei diese Einrichtung umfasst:
- einen Eingangs-Lichtwellenleiter (42) für im WDM-Verfahren übertragene optische Signale,
- einen Ausgangs-Lichtwellenleiter (44) für im WDM-Verfahren übertragene optische Signale;
- einen optischen Zirkulator (40), der ein erstes (P1), ein zweites (P2) und ein drittes (P3) Tor umfasst, wobei das erste und das dritte Tor (P1, P3) mit dem Eingangs-Lichtwellenleiter (42) bzw. dem Ausgangs-Lichtwellenleiter (44) verbunden sind und ein dritter Lichtwellenleiter (46) mit dem zweiten Tor (P2) verbunden ist, und der eine Faser (48) umfasst, welche für jeden der N Kanäle ein dazugehöriges Bragg-Gitter (Rₙ) aufweist, um durch Reflexion die optischen Signale des dazugehörigen Kanals zum zweiten Tor (P2) zurückzusenden, wobei die Entfernung Iₙ zwischen dem n-ten und dem (n+1)-ten Bragg-Gitter (Rₙ, Rₙ₊₁) so gewählt wird, dass eine Gesamtverzögerung τₙ" zwischen dem (n+1)-ten und dem n-ten Kanal eingeführt wird, um zwischen dem (n+1)-ten Kanal und dem n-ten Kanal eine Zeitverzögerung von τₙ am Eingang des Faserabschnitts nach dieser Einrichtung (15) gegenüber dem Eingang des Lichtleitfaserabschnitts (TF) vor dieser Einrichtung (15) zu erhalten, wobei τₙ größer als null und kleiner als etwa 600 ps gewählt wird, wobei für alle Kanäle τₙ = τ gilt.

6. Einrichtung zur Anwendung des Verfahrens nach Anspruch 1, wobei diese Einrichtung aufweist:
- einen Eingangs-Lichtwellenleiter für im WDM-Verfahren übertragene optische Signale;
- einen Demultiplexer (19) für die im WDM-Verfahren gemultiplexten optischen Signale am Ausgang dieses Eingangs-Lichtwellenleiters in N einzelnen Kanälen (21);
- einen Multiplexer (23) für die optischen Signale am Ausgang der N einzelnen Kanäle, wobei der Ausgang des Multiplexers mit einem Ausgangs-Lichtwellenleiter verbunden ist; und
- eine Verzögerungsleitung (25), die in jedem dazugehörigen einzelnen Kanal angeordnet ist, deren Länge jeweils so gewählt wird, dass eine Gesamtverzögerung τₙ" zwischen dem (n+1)-ten und dem n-ten Kanal eingeführt wird, um zwischen dem (n+1)-ten Kanal und dem n-ten Kanal eine Zeitverzögerung von τₙ am Eingang des Faserabschnitts nach der Einrichtung (15) gegenüber dem Eingang des Lichtleitfaserabschnitts (TF) vor dieser Einrichtung (15) zu erhalten, wobei τₙ größer als null und kleiner als etwa 600 ps gewählt wird, wobei für alle Kanäle τₙ = τ gilt.

## Claims

1. A method of reducing the intensity distortion induced by cross phase modulation in a wavelength division multiplexed optical fiber transmission system (1) comprising a transmission line (7) made up of a plurality of optical fiber segments (TF) with at least one repeater (9) interposed between two optical fiber segments (TF), the transmission system (1) having N different wavelength channels, where N is an integer greater than unity, and in the method, in the or each repeater (9) interconnecting first and second consecutive fiber segments (TF), a time offset is introduced between the channels in such a manner that compared with the inlet of the first optical segment, the (n+1)^{th} and the n^{th} channels are offset by τₙ at the inlet to the second fiber segment (TF), where n is an integer less than N, where τₙ is selected to be greater than zero and less than about 600 ps, with τₙ = τ for all the channels.

2. A method according to claim 1, **characterized in that** the time offset τ lies approximately in the range T/10 to 1.5*T where T is the duration of one bit.

3. A method according to claim 1 or 2, **characterized in that** the time offset τ lies approximately in the range 5 ps to 200 ps.

4. A method according to any one of claims 1 to 3, **characterized in that** it further includes a step of demultiplexing prior to introducing time offsets between the channels, and a step of multiplexing performed after the time offsets between the channels have been introduced.

5. A unit for implementing the method according to claim 1, said unit comprising:
· an inlet light waveguide (42) for wavelength division multiplexed optical signals;
an outlet light waveguide (44) for wavelength division multiplexed optical signals; and
· an optical circulator (40) comprising first, second, and third ports (P1, P2, P3) with the first and third ports (P1, P3) connected respectively to said inlet light waveguide (40) and to said outlet light waveguide (44), and with a third light waveguide (46) connected to the second port (P2) and comprising a fiber (48) having a Bragg grating (Rₙ) associated with each of the N channels to reflect the optical signals of the associated channel back to the second port (P2), the distance Iₙ between the n^{th} and (n+1)^{th} Bragg gratings (Rₙ, Rₙ₊₁) being selected in such a manner as to introduce a total delay τₙ" between the (n+1)^{th} and the n^{th} channel so as to obtain a time offset of τₙ between the (n+1)^{th} and the n^{th} channel at the inlet of the fiber segment following said unit (15) relative to the offset between them at the inlet to the optical fiber segment (TF) preceding said unit (15), where τₙ is selected to be greater than zero and less than about 600 ps, with τₙ = τ for all the channels.

6. A unit for implementing the method according to claim 1, said unit comprising:
· an inlet light waveguide for wavelength division multiplexed optical signals;
· a demultiplexer (19) for demultiplexing wavelength division multiplexed optical signals at the outlet from the inlet light waveguide into N individual channels (21);
· a multiplexer (23) for multiplexing the optical signals at the outlet from the N individual channels, the outlet from the multiplexer being connected to an outlet light waveguide; and
· a delay line (25) disposed in each associated individual channel, the length of each delay line being selected in such a manner as to introduce a total delay τₙ" between the (n+1)^{th} and the n^{th} channels so as to obtain between the (n+1)^{th} and the n^{th} channels a time offset of τₙ at the inlet to the fiber segment following said unit (15) relative to the offset between them at the inlet to the optical fiber segment (TF) preceding said unit (15), where τₙ is selected to be greater than zero and less than a about 600 ps, with τₙ = τ for all the channels.
